# EUROPEAN PATENT SPECIFICATION

(11) **EP 4 390 311 B1**
(45) Date of publication and mention of the grant of the patent: **24.06.2026**
(21) Application number: 22214860.3
(22) Date of filing: 20.12.2022
(51) Int. Cl.: G01C 15/04, G01C 15/00

(54) **SURVEY PRISM IDENTIFICATION**
IDENTIFIZIERUNG EINES VERMESSUNGSPRISMAS
IDENTIFICATION DE PRISME D`ARPENTAGE

(43) Date of publication of application: 26.06.2024
(73) Proprietor: Sandvik Mining and Construction G.m.b.H., 8740 Zeltweg (AT)
(72) Inventor: GIMPEL, Martin, 8740 Zeltweg (AT)
(74) Representative: Sandvik

(56) References cited:
- US-A1- 2010 085 579
- US-A1- 2022 011 106

## Description

### TECHNICAL FIELD

The invention relates to reflectors or prisms that must be detected in a measurement to determine the position of a mine vehicle in a mine. Determining the position of a mine vehicle in a mine requires measuring the positions of reflectors or prisms attached to the wall of the mine and to the mine vehicle with a total station. It must be ensured that the position of the correct reflectors is recorded, and that the determination is not disturbed by other reflecting objects on the site. Currently, measuring the position of the prisms with the total station is cumbersome.

### BACKGROUND

Currently, electromechanical, or other means are used at the reflectors to briefly shield the laser beam from the total station. Unsuccessful measurements to the thus shielded reflectors are used as an indication to identify a given reflector or prism. The electromechanical, or other means are shortly thereafter operated to target the reflector so that the reflectors used for the measurement can be distinguished from other reflectors on the site. Usually, at least two or even three individual measurements are required to identify a prism. However, such a procedure may fail if the line of sight is obstructed. Furthermore, such process is slow and error prone.

Another alternative is to use more than the minimum required number of two prisms on the machine and distinguish the prisms by their relative distance. This requires more measurement steps and has the disadvantage that unintended moving of the machine between the three single point measurements renders the measurement useless.

US 2022/011106 A1 discloses a surveying instrument and method for accurately determining the distance to a target in the close range for a specific setup of the surveying instrument, where the central part of the received ray bundle is shaded by a component of the optical unit of the surveying instrument. When targeting on the target in an on-target state the accuracy of the distance measurement decreases in the close range due to spatial and temporal inhomogeneities of the beam profile. In some aspects the target is targeted in a misaligned targeting state, such that the reflected measuring beam impinges on a part of the detector surface, which is not shaded, thereby leading to an increased measuring accuracy.

US 2010/085579 A1 discloses a method for determining rotational position of a target in a target tracking system. The target comprises a plurality of light emitting elements arranged circumferentially around the target. The target tracking system further comprises a tracker unit capable of detecting light emitted by said light emitting elements. The method comprises the steps of emitting from said light emitting elements an omni-directional synchronization signal; detecting in the tracker said synchronization signal; activating said light emitting elements sequentially starting from a reference direction, wherein each light emitting element is activated for a predetermined time and emits light during the time it is activated; detecting in the tracker unit a time when a maximum amount of light is received from the target; and calculating the reference direction for the target relative to a coordinate system based on the time interval between direction of synchronization signal and the direction of maximum amount of light received from the target. An active target for use in the method is also disclosed.

### SUMMARY OF INVENTION

It is an object of the present invention to provide reflectors that facilitate the measurement of their positions and allow correct association of the reflectors to the measurement process.

This object is achieved with an optical device having the features of claim 1 and a method having the features of claim 11.

The optical device for position determining according to the invention comprises a reflector configured to reflect an optical signal, a sensor mounted to or nearby the reflector, the sensor configured to detect the optical signal and to convert the optical signal to an electrical signal, and circuitry configured to receive the electrical signal from the sensor and to recognize a feature associated with the optical signal in the electrical signal.

The reflector may be a prism such as a ball prism or any other reflector such as a parabolic or planar reflector or a grating. The circuitry may comprise one or more microprocessors configured to perform data processing and feature recognition. For example, the circuitry may comprise a microcontroller.

According to an embodiment the circuitry is configured to continuously monitor the electrical signal for recognizing the feature. According to another embodiment the circuitry is configured to record the electrical signal for a predetermined duration and perform the recognition of the feature on the recorded signal trace. The predetermined duration may be in the range of microseconds, milliseconds, or seconds.

The feature associated with the optical signal may be recognized in the electrical signal by detecting an amplitude in the electrical signal exceeding a predetermined amplitude threshold. g. by detecting an amplitude in the power spectrum of the electrical signal at a specific frequency of the optical signal that exceeds a predetermined power threshold. The specific frequency may be a modulation frequency. Additionally, or alternatively, the feature associated with the optical signal may be recognized in the electrical signal by detecting a peak amplitude, particularly a local peak amplitude, in the power spectrum of the electrical signal at a specific frequency of the optical signal. For example, the feature associated with the optical signal may be recognized in the electrical signal by detecting that a peak amplitude in the power spectrum exceeds, particularly substantially exceeds, the mean value of the amplitude in the power spectrum measured for a predetermined duration. The peak amplitude may be a local peak amplitude or a local maximum or significance, which is specifically useful when a rectangular signal is employed and hence, a multitude of peaks may be visible in the result of a (fast) Fourier transform of the signal. Additionally, or alternatively, the feature may be recognized by cross-correlating the electrical signal with a template signal and detecting a peak amplitude in the cross-correlation exceeding a significance threshold. For example, the power spectrum of the electrical signal and a template spectrum may be used for cross-correlation.

A peak in the data may be detected by searching for a local maximum with a local signal-to-noise ratio over a predetermined threshold. Also, the properties of the first or second derivative of the data may be employed for peak detection.

Preferably, the amplitude or significance threshold is set according to the level of noise in the electrical signal. More particularly, the amplitude threshold and correspondingly, the significance threshold may be set to a multiple of or being equal to the root mean square amplitude of noise or standard deviation of the signal and may preferably be set to 2σ (sigma), or more preferably 3σ, 4σ, or 5σ.

The template signal may be a previously recorded electrical signal or may be a synthetic ideal signal.

According to an embodiment deep learning or machine learning resources may be used for feature recognition.

According to an embodiment the circuitry may receive the electrical signal from the sensor via a wired connection or via wireless communication. For example, the circuitry and the sensor may each comprise a wireless communication module. The sensor may then be configured to digitize and transmit the electrical signal to the circuitry via a wireless communication protocol and the circuitry may be configured to receive the transmitted electrical signal for feature recognition.

According to an embodiment the sensor or the circuitry may be configured to transmit the electrical signal to a processing device, such as a control unit or server, via a wired connection or via wireless communication. The processing device may be external to the optical device. In particular, the processing device may be installed at a location on the site different from the location of the optical device. For example, the processing device may be comprised in a control center on the site, a total station, or a mining machine. The processing device may be configured to perform feature recognition or provide data storage or other additional processing functions.

According to an embodiment the optical device may comprise energy storage means such as a battery. Alternatively, the optical device may be powered by a wired connection to the power distribution of a mining machine the optical device is mounted on. Alternatively, the optical device may be powered by a power distribution network on the site in case the optical device is mounted to a wall of the mine.

The optical device according to the invention facilitates the measurement of the position of an optical measurement device, such as a total station, or a total station robot, relative to the optical device. Because the optical device, in particular the circuitry included in the optical device, can detect a feature in the electrical signal associated with the optical signal, the optical device can be identified as uniquely belonging to a group of one or more optical devices that have been predetermined to measure the position of the optical measurement device relative to the one or more optical devices. Accordingly, the measurement of the position of the optical measurement device is not interfered with by other reflective objects and light sources on the site that could be incorrectly identified as belonging to the group of optical devices predetermined for measurement. The optical device is quickly identified and correctly assigned to the measurement process, reducing the time required for the measurement and improving the reliability of the measurement.

According to the invention, the feature associated with the optical signal is a frequency component of the optical signal. The frequency component may be a modulation frequency, pulse frequency, or frequency of a carrier wave.

In an embodiment, the optical signal is a laser signal, and the frequency component is a modulation frequency of the laser signal. The laser signal may be emitted from an optical measurement device, for example a total station.

According to an embodiment, the optical device comprises an amplifier configured to amplify the electrical signal. Therein, the amplifier may be a logarithmic amplifier. As an advantage, this may facilitate the recognition of the feature associated with the optical signal in the amplified electrical signal.

In yet another embodiment, the optical device further comprises a solid-state relay configured to isolate the electrical signal. Electromagnetic noise may be present because of nearby machinery and other sources. As a result, noise can be capacitively coupled, inductively coupled, or otherwise coupled into the optical device. The noise may mix with and obscure the electrical signal. Isolation of the electrical signal by use of a solid-state relay may enable blocking of the propagation of noise through the optical device and may facilitate the recognition of the feature associated with the optical signal in the isolated electrical signal. According to an embodiment, the optical device further comprises electronic filter means, for example one or more high-pass or band-pass filters, to filter the electrical signal to facilitate the recognition of the feature associated with the optical signal in the filtered electrical signal.

According to the invention, the sensor comprises at least one photodetector covering a part of the reflector. The at least one photodetector may be a photodiode, CCD chip, or photomultiplier.

In an embodiment, the at least one photodetector is arranged at the reflector to detect a scattered part of the optical signal diffusively scattered by the reflector without directly receiving the optical signal from the optical measurement device or the optical signal reflected by the reflector or a major part thereof. Thereby obstruction of the (reflected) optical signal is avoided.

According to an embodiment, the reflector is a ball prism. In this case at least one photodetector is arranged on the outside of the ball prism, in particular, on an outer surface or close to or at an edge of an opening or a window or windowpane in the outer surface of the ball prism. This enables detecting a scattered part of the optical signal without directly receiving at the photodetector the optical signal entering or being reflected by the ball prism. Additionally, or alternatively, at least one photodetector may be arranged inside an opening in the ball prism that is provided for receiving the optical signal. The photodetector may be arranged on one of the reflecting surfaces of the prism on the frontside or backside thereof.

According to an embodiment multiple photodetectors are arranged at the outer surface of the reflector or ball prism. For example, the multiple photodetectors can be arranged at equal distances around the opening in the ball prism and close to its edge. The multiple photodetectors may also be arranged inside the ball prism on a windowpane provided for closing the opening in the ball prism.

In an embodiment, the circuitry of the optical device is further configured to transmit a synchronization signal upon recognition of the feature associated with the optical signal in the electrical signal. According to an embodiment a trigger may be transmitted to the optical device to indicate the start of the measurement process. For example, the optical device may be kept in a sleep mode if not presently used for a measurement. A trigger may then be transmitted to the optical device for activating the optical device, and more particularly for causing the optical device to start detecting the optical signal and searching for the feature associated with the optical signal in the electrical signal. The trigger can be a specific optical signal having a modulation to be recognized as the trigger by the optical device.

According to a further aspect of the invention, a system for position determining is provided comprising at least one optical device as described above and an optical measurement device which is configured to send an optical signal in a direction of the optical device, to receive a reflected optical signal and a synchronization signal from the optical device, to correlate the received reflected optical signal and the synchronization signal, to determine an identity of the optical device based on the correlation, and to determine a position of the optical device relative to the optical measurement device.

According to an embodiment, the system comprises two or more optical devices. In yet another embodiment, the system is configured to determine the position of each of the two or more optical devices. The optical measurement device may use a same (modulation) frequency of the optical signal for each optical device. This is possible because each optical device can be identified by a synchronization signal that comprises an identifier associated with the optical device.

According to an embodiment, the system comprises two or more of the optical measurement devices. Each optical measurement device may use a characteristic optical signal, e. g. different modulation frequency, resulting in a different feature in the electrical signal for each optical measurement device. The optical device may then be configured to recognize the different features in the electrical signal and discern between the different features to identify the optical measurement device. The optical device may then send the synchronization signal to the identified optical measurement device.

The system for position determining may comprise the additional features as described above regarding the optical device.

According to an embodiment the optical measurement device is configured to send the optical signal in an estimated direction of the optical device and at the same time scan a predetermined field of view including the estimated direction of the optical device. If during the scan of the field of view, the optical measurement device receives a reflected signal from the optical device, the optical device is determined as a candidate for being the searched optical device. Once a reflected signal is detected, the direction of sending of the optical signal is maintained to correspond to the direction from which the reflected signal was received. While sending the optical signal is continued an attempt is made to correlate the reflected signal with a synchronization signal from the optical device. If the candidate optical device converts the optical signal to an electrical signal, and recognizes a feature associated with the optical signal, a corresponding synchronization signal will be received in the optical measurement device and a correlation can be conducted.

In an embodiment, the synchronization signal comprises an identifier associated with the optical device.

The optical measurement device may correlate the received reflected optical signal and the received synchronization signal by associating the reception of the reflected optical signal with the reception of the synchronization signal based on a condition. The condition can be a timely correlation between the optical signal and the synchronization signal. Hence, to identify the candidate optical device as an optical device belonging to a group of one or more optical devices predetermined for an optical measurement, the synchronization signal must be received within a certain time interval after the optical signal has been transmitted from the optical measurement device to the optical device. Such a time interval can be in the range of microseconds, or milliseconds, or seconds. The time interval is preferably less than 8 seconds, more preferably less than 5 seconds, more preferably less than 3 seconds, and more preferably less than 2 seconds. In case the optical device and the optical measurement device communicate via non-realtime ethernet or wireless networks, a delay in signaling may be accounted for in the time interval.

If the correlation is successful, the candidate optical device is determined to be one of the searched optical devices for conducting the position determination of the optical measurement device.

The optical measurement device may be configured to determine the position of the optical device relative to the optical measurement device after the successful correlation of the received reflected signal and the synchronization signal using a distance and angular measurements using the one or more optical devices predetermined for an optical measurement.

The optical measurement device may be configured to determine the position of the optical device relative to the optical measurement device by calculating the distance between the optical device and the optical measurement device as a function of a time between sending the optical signal and receiving the reflected optical signal. Additionally, the optical measurement device may be configured to determine the position of the optical device relative to the optical measurement device by measuring horizontal and vertical angles as well as slope distance of the optical device to the optical measurement device.

The optical measurement device may comprise an electronic distance meter, an electronic theodolite, and a microprocessor.

According to an embodiment, the optical measurement device comprises a microcontroller with memory and is configured to correlate the received reflected optical signal and the synchronization signal by setting entries in a list saved in the memory. More particularly, the optical measurement device is configured to set a first entry in the list to the bit value of one upon the reception of the reflected optical signal. The optical measurement device is then configured to reset the first entry to the bit value of zero after a predetermined waiting time corresponding to the predetermined time window. Similarly, the optical measurement device is configured to set a second entry in the list to the bit value of one upon reception of the synchronization signal. The optical measurement is further configured to reset the second entry to the value of zero after expiration of the predetermined waiting time. The optical measurement device is configured to monitor the entries in the list. The optical measurement device is then configured to correlate the received reflected optical signal and the synchronization signal upon registering that both the first entry and the second entry simultaneously have the bit value of one. The bit values of one and zero may be used interchangeably, that is, the optical measurement device may alternatively be configured to correlate the received reflected optical signal and the synchronization signal upon registering that both the first entry and the second entry in the list simultaneously have the bit value of zero.

In an embodiment, the optical measurement device immediately correlates its position and an ID of an optical device after the receipt of the synchronization signal from the optical device that has been hit by the optical signal or laser beam. Each optical device may carry a unique ID that is assigned in a microcontroller of the optical measurement device. Hence, if a synchronization signal or identifier associated with a "laser hit event" is received from an optical device within the above-mentioned time window after a position measurement from the optical measurement device, correlation is successful, e. g. the optical device is associated to the measurement process, and the information can be used for further processing.

For example, the optical measurement device or total station, and more specifically, a total station control algorithm, may perform a measurement. By use of the optical signal, e. g. laser beam emitted from a (distance measurement) laser of the optical measurement device, a laser hit event or "frequency observation event" is triggered in one of the optical devices (e. g. connected prisms of the independently controlled machine). The total station or a machine control unit keeps a list of recently observed laser hit events with the ID or index of the hit optical device or prism, as well as the "event observation time". When the total station (total station control algorithm) reports the performed measurement, typically with a delay of 1 to 4 seconds, through the communication layer (e. g. ethernet network), this list is checked and the correct prism is identified in this correlation process. The navigation program can use this information to apply the correct calculation (the correct local transform) to the provided prism measurement. Thereby, a potential ambiguity of multiple possible machine positions may be overcome or remediated. The ambiguity may arise since, without further information, the number of possible machine transforms for a single prism measurement is the number of prisms present in the observable distance of the total station.

Hence, the system according to the invention may advantageously enable an instant correlation of position and ID of the optical device.

According to an embodiment, the optical measurement device may be configured to start scanning a different field of view in case no reflected optical signal or synchronization signal is received, or in case the correlation fails. In addition, the optical measurement device may be configured to stop scanning the field of view and provide an error signal in case no reflected optical signal or synchronization signal is received, or in case the correlation fails.

According to an embodiment, the system further comprises a mining vehicle, wherein the optical device is mounted to the mining vehicle. Consequently, the system according to the invention may be capable of determining the position of the mining vehicle relative to the optical measurement device. Further, multiple optical devices may be mounted to the mining vehicle and on the walls of the mine. The measurement process may be repeated for the multiple optical devices. In this way, determination of position and orientation of the mining vehicle may be performed. For example, several optical devices may be mounted to a rover unit of the mining vehicle comprising an excavator or borer miner. Hence, the system may be capable of determining the position and orientation of the excavator.

The mining vehicle may be configured to move on the site. More particularly, the mining vehicle may be configured to move at a constant speed in the mine as it excavates bedrock. The system according to the invention may enable determining the position of the mining vehicle even though the mining vehicle may move during the measurement process.

The optical device and/or the optical measurement device may optionally be powered by the power distribution in the mining vehicle. The determined position and ID of the optical device may be signaled to the mining vehicle for machine control.

As a further aspect of the invention, a method for position determining is provided comprising the steps of sending an optical signal, by an optical measurement device, in a direction of an optical device. The method further comprises detecting, by a sensor of the optical device, the optical signal, and converting the optical signal to an electrical signal. The method further comprises receiving, by circuitry of the optical device, the electrical signal and recognizing a feature associated with the optical signal in the electrical signal.

Recognizing the feature associated with the optical signal in the electrical signal may advantageously enable to associate the reflector instantly and accurately to the measurement process, thereby reducing the time required for the measurement and improving measurement reliability.

According to an embodiment, the method further comprises transmitting, by the circuitry, a synchronization signal to the optical measurement device upon recognition of the feature; reflecting, by a reflector of the optical device, the optical signal to the optical measurement device; and receiving, by the optical measurement device, the reflected optical signal and the synchronization signal, correlating the received reflected optical signal and the synchronization signal, determining an identity of the optical device based on the correlation, and determining a position of the optical device relative to the optical measurement device.

In this way, the position and ID of the optical device may be instantly correlated. The position of the optical device relative to the optical measurement device may be determined without disturbance by other reflecting objects or light sources on the site. The optical device targeted by the laser of the total station may be immediately and correctly identified, thereby making it obsolete to measure further prism for determining the position of the optical device.

This reduces the measurement time and improves the measurement reliability.

In yet another embodiment, the method further comprises amplifying and isolating the electrical signal. This may advantageously facilitate the recognition of the feature associated with the optical signal in the amplified and isolated electrical signal.

Correspondingly, in its embodiments, the method for position determining may further comprise the additional features as described above regarding the optical device and the system.

### BRIEF DESCRIPTION OF THE DRAWINGS

Further features, characteristics and benefits of the invention result from the following description of embodiments of the invention in combination with the drawing in which
- Fig. 1: shows a mining system comprising an optical measurement device and an optical device according to an embodiment of the invention;
- Fig. 2: shows a mining system comprising an optical measurement device, an optical device, and a mining vehicle according to an embodiment of the invention;
- Fig. 3: schematically illustrates an optical device according to an embodiment of the invention;
- Fig. 4A: shows an example power spectrum of a received electrical signal according to an embodiment of the invention; and
- Fig. 4B: shows an example power spectrum of a received electrical signal according to an embodiment of the invention.

### DETAILED DESCRIPTION

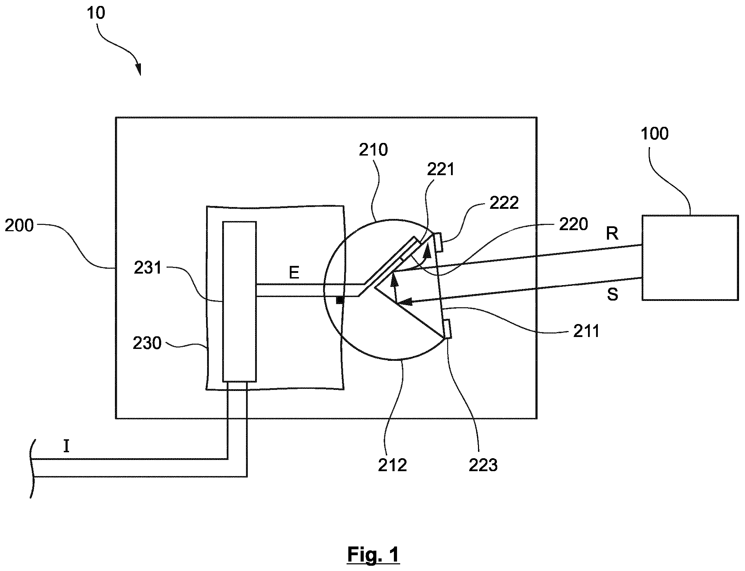

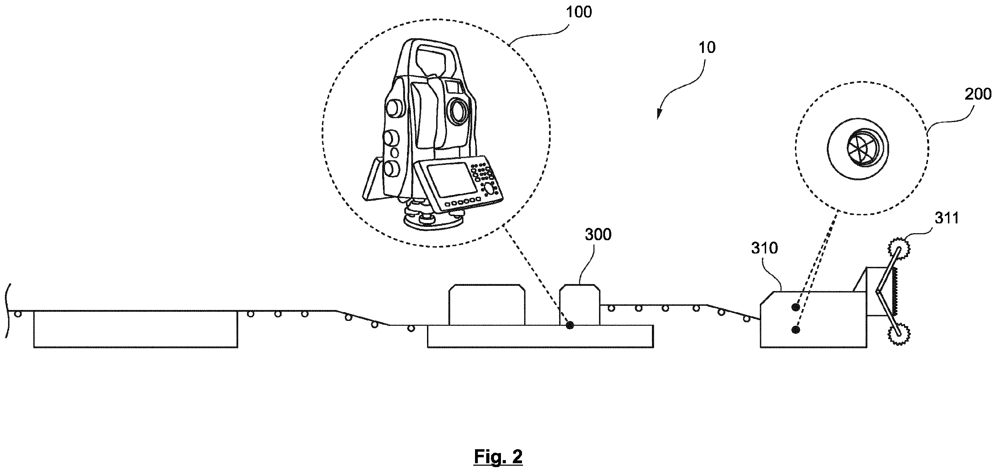

Fig. 1 and Fig. 2 show a mining system 10 comprising a measurement device 100 such as a total station and an optical device 200 according to an embodiment of the invention. As schematically shown in Fig. 1, the optical measurement device 100 may be configured to send an optical signal or laser signal S in a direction of the optical device 200. The optical device 200 comprises a reflector 210 such as a ball prism configured to reflect the optical signal S. The optical device 200 further comprises at least one sensor 220 mounted to the reflector 210. The sensor 220 is configured to detect the optical signal S and to convert the optical signal S to an electrical signal E. The sensor 220 comprises at least one photodetector 221, 222, 223 covering a part of the reflector 210. As illustrated in Fig. 1, a first photodetector 222 and a second photodetector 223 are arranged on the outside of the reflector 210 on a front surface 211 such as a transparent window 211 facing towards the optical measurement device 100, i.e. the surface through which the optical signal S (or laser beam) enters the ball prism and the reflected optical signal R (or reflected laser beam) exits the ball prism. The first and the second photodetector 222, 223 are arranged on the reflector 210 to detect a part of the optical signal S scattered inside the ball prism without obstructing the optical signal S entering the ball prism and the reflected optical signal R exiting the ball prism. Additionally, a third photodetector 221 is arranged in the inside of the reflector 210 or ball prism to detect a part of the optical signal S scattered inside the ball prism. Each of the first, second, and third photodetector 221, 222, 223 may be a photodiode. Additionally, one or more further photodetector may be arranged at a second outer spherical surface 212 of the reflector 210 of the ball prism preferably close to the edge of the window 211. The one or more further photodetectors can be arranged at equally distant positions around the window of the ball prism.

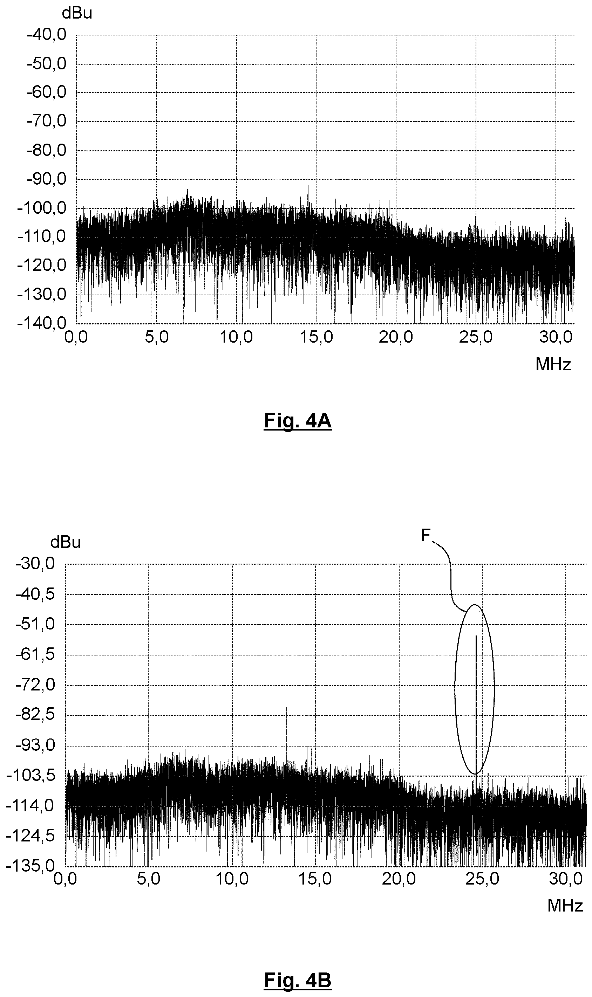

As presented in Fig. 1, the optical device 200 further comprises circuitry 230 configured to receive the electrical signal E from the sensor 220 and to recognize a feature F (shown in Fig. 4B) associated with the optical signal S in the electrical signal E. The optical signal S may be a laser signal from the optical measurement device 100, and the feature F associated with the optical signal S may be a modulation frequency of the laser signal. The circuitry 230 may be configured to continuously monitor the electrical signal E in search for the feature F. Additionally or alternatively, the circuitry 230 may be configured to record the electrical signal E for a predetermined duration and perform recognition of the feature F on the recorded signal traces.

The optical device 200 comprises an amplifier 231, for example, a logarithmic amplifier, configured to amplify the electrical signal E for facilitating the recognition of the feature F associated with the optical signal S in the amplified electrical signal E. Additionally, the optical device may comprise a solid-state relay (not shown) configured to isolate the electrical signal E.

The circuitry 230 of the optical device 200 may be further configured to transmit a synchronization signal I upon recognition of the feature F associated with the optical signal S in the electrical signal E. The synchronization signal I may be an identifier associated with the optical device 200. The circuitry 230 may be configured to transmit the synchronization signal I to the optical measurement device 100 via a wired connection. Optionally, the circuitry 230 comprises a wireless communication module (not shown) to wirelessly transmit the synchronization signal I to the optical measurement device 100.

The optical measurement device 100 may be configured to receive the reflected optical signal R and the synchronization signal I from the optical device 200, to correlate the received reflected optical signal R and the synchronization signal I, and to identify the optical device 200 based on the correlation. This means, that an optical device 200 is identified as an optical device belonging to a group of one or more optical devices determined for a measurement of a position of the measurement device 100 in relation to one or more optical devices 200 only if the correlation is successful. Upon a successful correlation a position of the optical device 200 relative to the optical measurement device 100 is determined. The correlation between the received reflected optical signal R and the synchronization signal I may be a time correlation. A time correlation will be given if the reflected optical signal R and the synchronization signal are received at the measurement device 100 within a predetermined time interval.

If the optical measurement device 100 is a total station, it may comprise an electronic distance meter, an electronic theodolite, and a microprocessor. In addition, the total station may comprise leveling means configured to level the total station before start of the measurement. The optical measurement device 100 may determine the position of the optical device 200 relative to the optical measurement device 100 by calculating the distance between the optical device 200 and the optical measurement device 100 as a function of a measured time between sending the optical signal S and receiving the reflected optical signal R. Additionally or alternatively, the optical measurement device 100 may perform position determining by measuring a phase shift between the outgoing (preferably modulated) optical signal S and the incoming reflected optical signal R. The optical measurement device 100 may be configured to determine the position of the optical device 200 relative to the optical measurement device 100 by measuring horizontal and vertical angles as well as slope distance of the optical device 200 to the optical measurement device 100.

The optical measurement device 100 or total station may be configured to first scan a predetermined field of view in the estimated direction of the optical device 200 with a vertical fan laser (not shown) for targeting of the optical device 200. Upon reception of the reflected fan-laser signal and a successful correlation of the received reflected fan-laser signal and a received synchronization signal I from the optical device 200, the optical device 200 is determined as belonging to the desired group of optical devices for the position determination of the optical measurement device. The optical measurement device will then start the measurement process for position determining by sending the optical signal S emitted from a measurement laser in the direction of the optical device 200 to determine its distance and angular position relative to the optical device.

As illustrated in Fig. 2, the optical measurement device 100 of Fig. 1 is a total station, and more preferably a total station robot, and the optical device 200 of Fig. 1 is a ball prism. The optical measurement device 100 can be mounted to a mining vehicle 300. Alternatively, the optical measurement device 100 comprises robotic driving means configured to move the total station in association with the movement of the mining vehicle 300. According to the embodiment shown the mining vehicle 300 comprises a rover unit 310 having an excavator or borer miner 311. At least one optical device 200 is mounted to the rover unit of the mining vehicle 300. Further, multiple optical devices 200 are mounted to the mining vehicle, and particular to the rover unit, and on the walls of the mine (not shown). The measurement process may be repeated for each optical device 200 so that the position and orientation of the mining vehicle in the mine can be determined. The determined position and ID of the optical device 200 are then signaled to the mining vehicle 300 for machine control. The optical device may comprise energy storage means (not shown) or may be powered by wires connecting to the power distribution of the mining vehicle 300.

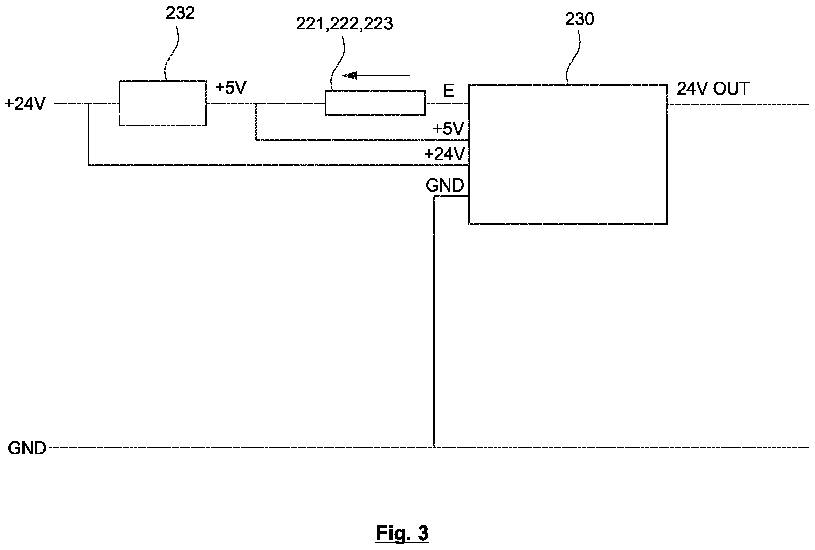

Fig. 3 schematically illustrates an optical device 200 according to an embodiment of the invention. More particularly, Fig. 3 shows a schematic of an example circuit design of an optical device 200 according to an embodiment of the invention. The circuitry 230 of the optical device 200 provides the voltage bias (+ 5V) for the photodetector or photodiode 221, 222, 223. The optical device 100 further comprises a voltage converter 232 connected to and between the photodetector 221, 222, 223 and the circuitry 230. The circuitry 230 comprises an input for receiving the electrical signal E from the photodetector 221, 222, 223. The circuitry 230 comprises an amplifier 231 to amplify the received electrical signal and may comprise one or more electronic filters (not shown). The circuitry 230 further comprises an input for an input voltage (+24V) and an output for an output voltage (+24V) measured to ground. The circuitry 230 further comprises an input connected to ground (GND).

Fig. 4A and Fig. 4B show example power spectra of electrical signals received from an optical device 200 and an optical measurement device 100 as presented above in Figs. 1 to 3. The power spectral represent the distribution of power over the frequency components composing the electrical signal E. The y-axis of the spectra denotes the power of the electrical signal in units of decibel (unloaded, dBu). The x-axis of the spectra denotes the frequency in units of MHz. Fig. 4A shows an example power spectrum of an electrical signal E which was received outside of a measurement process with no optical signal applied (laser off). On the other hand, Fig. 4B shows an example power spectrum of an electrical signal E received during a measurement process when a laser strikes the optical device 200 (laser on). The feature F associated with the optical signal or laser signal can be recognized by detecting a peak amplitude in the power spectrum of the electrical signal E. In particular, the feature F associated with the optical signal may be recognized by detecting a peak amplitude in the power spectrum that exceeds a predetermined power threshold with respect to a baseline power at or around a frequency corresponding to the frequency component of the optical signal S. The frequency component, for example, may be a modulation frequency of the laser signal. In the example given in Fig. 4B, the feature F associated with the laser signal may be recognized by detecting a peak amplitude in the power spectrum of the electrical signal E at a frequency of approximately 24,5 MHz or 13 MHz.

In the above-described configuration and as presented in Figs. 1 to 4, the optical device 100 and the system 10 for position determining have the following advantages. The optical device 200, targeted by the optical measurement device 100 or total station, may be immediately and correctly identified. The optical measurement device 100 may be able to determine the position of the optical device 200 relative to the optical measurement device 100 without disturbance by other reflecting objects or light sources on the site. The synchronization signal I transmitted from the optical device 200 to the total station 100 enables instant correlation of the position and ID of the optical device 200, obsoleting the need for measuring further prism to determine the position of the optical device. The reflector 210 of the optical device 200 may be instantly and accurately associated to the measurement process, thereby reducing the time required for the measurement and improving measurement reliability.

Numerous modifications may be applied to the embodiments described without departing from the scope of the invention.

### LIST OF REFERENCE SIGNS

- 10: system
- 100: optical measurement device
- 200: optical device
- 210: reflector
- 211: first surface
- 212: second surface
- 220: sensor
- 221, 222, 223: photodetector
- 230: circuitry
- 231: amplifier
- 232: voltage converter
- 300: mining vehicle
- 310: rover unit
- 311: borer miner
- S: optical signal
- R: reflected optical signal
- E: electrical signal
- I: synchronization signal

## Claims

1. An optical device (200) for position determining, comprising:
a reflector (210) configured to reflect an optical signal (S);
a sensor (220) mounted to the reflector (210), the sensor (220) configured to detect the optical signal (S), **characterized in that** the sensor (220) comprises at least one photodetector (221, 222, 223) covering a part of the reflector (210), and to convert the optical signal (S) to an electrical signal (E); and
circuitry (230) configured to receive the electrical signal (E) from the sensor (220) and to recognize a feature (F) in the electrical signal (E), said feature being a frequency component of the optical signal (S).

2. The optical device (200) of claim 1, wherein the optical signal (S) is a laser signal, and the frequency component is a modulation frequency of the laser signal.

3. The optical device (200) of anyone of claims 1 to 2, wherein the optical device (200) further comprises an amplifier (231) configured to amplify the electrical signal (E).

4. The optical device (200) of claim 3, wherein the amplifier (231) is a logarithmic amplifier.

5. The optical device (200) of anyone of claims 1 to 4, wherein the optical device (200) further comprises a solid-state relay configured to isolate the electrical signal (E).

6. The optical device (200) of anyone of claims 1 to 5, wherein the at least one photodetector (221, 222, 223) is arranged at a position on the reflector (210) to detect a scattered part of the optical signal (S) without directly receiving the optical signal (S) reflected by the reflector (210).

7. The optical device (200) of anyone of claims 1 to 6, wherein the circuitry (230) of the optical device (200) is further configured to transmit a synchronization signal (I) upon recognition of the frequency component of the optical signal (S) in the electrical signal (E).

8. A system (10) for position determining, comprising
At least one optical device (200) of anyone of claims 1 to 7; and
an optical measurement device (100) configured to send an optical signal (S) in a direction of the optical device (200), to receive a reflected optical signal (R) and a synchronization signal (I) from the optical device (200), to correlate the received reflected optical signal (R) and the synchronization signal (I), to determine an identity of the optical device (200) based on the correlation, and to determine a position of the optical device (200) relative to the optical measurement device (100).

9. The system of claim 8, wherein the correlation between the received reflected optical signal (R) and the synchronization signal (I) is a time correlation.

10. The system of claim 8 or 9, wherein the synchronization signal (I) comprises an identifier associated with the optical device (200).

11. A method for position determining, comprising
sending an optical signal (S), by an optical measurement device (100), in a direction of an optical device (200);
detecting, by a sensor (220) of the optical device (200), the optical signal (S), and converting the optical signal (S) to an electrical signal (E), **characterized in that** the sensor (220) comprises at least one photodetector (221, 222, 223) covering a part of a reflector (210) of the optical device (200);
receiving, by circuitry (230) of the optical device (200), the electrical signal (E) and recognizing a feature (F) in the electrical signal (E), said feature being a frequency component of the optical signal (S).

12. The method of claim 11, further comprising
transmitting, by the circuitry (230), a synchronization signal (I) to the optical measurement device (100) upon recognition of the feature (F);
reflecting, by a reflector (210) of the optical device (200), the optical signal (S) to the optical measurement device (100); and
receiving, by the optical measurement device (100), the reflected optical signal (R) and the synchronization signal (I), correlating the received reflected optical signal (R) and the synchronization signal (I), determining an identity of the optical device (200) based on the correlation, and determining a position of the optical device (200) relative to the optical measurement device (100).

13. The method of claim 11 or 12, further comprising amplifying and isolating the electrical signal (E).

## Patentansprüche

1. Optische Vorrichtung (200) zur Positionsbestimmung, umfassend:
einen Reflektor (210), der so konfiguriert ist, dass er ein optisches Signal (S) reflektiert;
einen am Reflektor (210) angebrachten Sensor (220), wobei der Sensor (220) so konfiguriert ist, dass er das optische Signal (S) erfasst, **dadurch gekennzeichnet, dass** der Sensor (220) mindestens einen Fotodetektor (221, 222, 223) umfasst, der einen Teil des Reflektors (210) bedeckt, und das optische Signal (S) in ein elektrisches Signal (E) umwandelt; und
eine Schaltung (230), die so konfiguriert ist, dass sie das elektrische Signal (E) vom Sensor (220) empfängt und ein Merkmal (F) im elektrischen Signal (E) erkennt, wobei es sich bei dem Merkmal um eine Frequenzkomponente des optischen Signals (S) handelt.

2. Optische Vorrichtung (200) nach Anspruch 1, wobei das optische Signal (S) ein Lasersignal ist und die Frequenzkomponente eine Modulationsfrequenz des Lasersignals ist.

3. Optische Vorrichtung (200) nach einem der Ansprüche 1 oder 2, wobei die optische Vorrichtung (200) ferner einen Verstärker (231) umfasst, der zur Verstärkung des elektrischen Signals (E) konfiguriert ist.

4. Optische Vorrichtung (200) nach Anspruch 3, wobei der Verstärker (231) ein logarithmischer Verstärker ist.

5. Optische Vorrichtung (200) nach einem der Ansprüche 1 bis 4, wobei die optische Vorrichtung (200) ferner ein Halbleiterrelais umfasst, das zur Isolierung des elektrischen Signals (E) konfiguriert ist.

6. Optische Vorrichtung (200) nach einem der Ansprüche 1 bis 5, wobei der mindestens eine Fotodetektor (221, 222, 223) an einer Position auf dem Reflektor (210) angeordnet ist, um einen gestreuten Teil des optischen Signals (S) zu erfassen, ohne das vom Reflektor (210) reflektierte optische Signal (S) direkt zu empfangen.

7. Optische Vorrichtung (200) nach einem der Ansprüche 1 bis 6, wobei die Schaltung (230) der optischen Vorrichtung (200) ferner so konfiguriert ist, dass sie beim Erkennen der Frequenzkomponente des optischen Signals (S) im elektrischen Signal (E) ein Synchronisationssignal (I) sendet.

8. System (10) zur Positionsbestimmung, umfassend
mindestens eine optische Vorrichtung (200) nach einem der Ansprüche 1 bis 7; und
eine optische Messvorrichtung (100), die so konfiguriert ist, dass sie ein optisches Signal (S) in Richtung der optischen Vorrichtung (200) sendet, ein reflektiertes optisches Signal (R) und ein Synchronisationssignal (I) von der optischen Vorrichtung (200) empfängt, das empfangene reflektierte optische Signal (R) und das Synchronisationssignal (I) korreliert, anhand der Korrelation die Identität der optischen Vorrichtung (200) bestimmt und eine Position der optischen Vorrichtung (200) relativ zur optischen Messvorrichtung (100) bestimmt.

9. System nach Anspruch 8, wobei die Korrelation zwischen dem empfangenen reflektierten optischen Signal (R) und dem Synchronisationssignal (I) eine Zeitkorrelation ist.

10. System nach Anspruch 8 oder 9, wobei das Synchronisationssignal (I) eine der optischen Vorrichtung (200) zugeordneten Kennung umfasst.

11. Verfahren zur Positionsbestimmung, umfassend
Senden eines optischen Signals (S) durch eine optische Messvorrichtung (100) in Richtung einer optischen Vorrichtung (200);
Erfassen des optischen Signals (S) durch einen Sensor (220) der optischen Vorrichtung (200) und Umwandeln des optischen Signals (S) in ein elektrisches Signal (E), **dadurch gekennzeichnet, dass** der Sensor (220) mindestens einen Fotodetektor (221, 222, 223) umfasst, der einen Teil eines Reflektors (210) der optischen Vorrichtung (200) bedeckt;
Empfangen des elektrischen Signals (E) durch die Schaltung (230) der optischen Vorrichtung (200) und Erkennen eines Merkmals (F) im elektrischen Signal (E), wobei das Merkmal eine Frequenzkomponente des optischen Signals (S) ist.

12. Verfahren nach Anspruch 11, ferner umfassend
Übertragen eines Synchronisationssignals (I) an die optische Messvorrichtung (100) durch die Schaltung (230) bei Erkennung des Merkmals (F);
Reflektieren des optischen Signals (S) mittels eines Reflektors (210) der optischen Vorrichtung (200) zu der optischen Messvorrichtung (100); und
Empfangen des reflektierten optischen Signals (R) und des Synchronisationssignals (I) durch die optische Messvorrichtung (100), Korrelieren des empfangenen reflektierten optischen Signals (R) und des Synchronisationssignals (I), Bestimmen einer Identität der optischen Vorrichtung (200) auf der Grundlage der Korrelation und Bestimmen einer Position der optischen Vorrichtung (200) relativ zu der optischen Messvorrichtung (100).

13. Verfahren nach Anspruch 11 oder 12, ferner umfassend Verstärken und Isolieren des elektrischen Signals (E).

## Revendications

1. Dispositif optique (200) de détermination de position, comprenant :
un réflecteur (210) configuré pour réfléchir un signal optique (S) ;
un capteur (220) monté sur le réflecteur (210), le capteur (220) étant configuré pour détecter le signal optique (S), **caractérisé en ce que** le capteur (220) comprend au moins un photodétecteur (221, 222, 223) couvrant une partie du réflecteur (210), et pour convertir le signal optique (S) en un signal électrique (E) ; et
un ensemble de circuits (230) configuré pour recevoir le signal électrique (E) provenant du capteur (220) et pour reconnaître une caractéristique (F) dans le signal électrique (E), ladite caractéristique étant une composante de fréquence du signal optique (S).

2. Dispositif optique (200) selon la revendication 1, dans lequel le signal optique (S) est un signal laser et la composante de fréquence est une fréquence de modulation du signal laser.

3. Dispositif optique (200) selon l'une quelconque des revendications 1 à 2, dans lequel le dispositif optique (200) comprend en outre un amplificateur (231) configuré pour amplifier le signal électrique (E).

4. Dispositif optique (200) selon la revendication 3, dans lequel l'amplificateur (231) est un amplificateur logarithmique.

5. Dispositif optique (200) selon l'une quelconque des revendications 1 à 4, dans lequel le dispositif optique (200) comprend en outre un relais à semi-conducteurs configuré pour isoler le signal électrique (E).

6. Dispositif optique (200) selon l'une quelconque des revendications 1 à 5, dans lequel au moins un photodétecteur (221, 222, 223) est agencé à une position sur le réflecteur (210) pour détecter une partie diffusée du signal optique (S) sans recevoir directement le signal optique (S) réfléchi par le réflecteur (210).

7. Dispositif optique (200) selon l'une quelconque des revendications 1 à 6, dans lequel l'ensemble de circuits (230) du dispositif optique (200) est en outre configuré pour transmettre un signal de synchronisation (I) lors de la reconnaissance de la composante de fréquence du signal optique (S) dans le signal électrique (E).

8. Système (10) de détermination de position, comprenant
au moins un dispositif optique (200) selon l'une quelconque des revendications 1 à 7 ; et
un dispositif de mesure optique (100) configuré pour envoyer un signal optique (S) dans une direction du dispositif optique (200), pour recevoir un signal optique réfléchi (R) et un signal de synchronisation (I) provenant du dispositif optique (200), pour corréler le signal optique réfléchi reçu (R) et le signal de synchronisation (I), pour déterminer une identité du dispositif optique (200) sur la base de la corrélation, et pour déterminer une position du dispositif optique (200) par rapport au dispositif de mesure optique (100).

9. Système selon la revendication 8, dans lequel la corrélation entre le signal optique réfléchi reçu (R) et le signal de synchronisation (I) est une corrélation temporelle.

10. Système selon la revendication 8 ou 9, dans lequel le signal de synchronisation (I) comprend un identifiant associé au dispositif optique (200).

11. Procédé de détermination de position, comprenant les étapes consistant à
envoyer un signal optique (S), par un dispositif de mesure optique (100), dans la direction d'un dispositif optique (200) ;
détecter, par un capteur (220) du dispositif optique (200), le signal optique (S), et convertir le signal optique (S) en un signal électrique (E), **caractérisé en ce que** le capteur (220) comprend au moins un photodétecteur (221, 222, 223) couvrant une partie d'un réflecteur (210) du dispositif optique (200) ;
recevoir, par l'ensemble de circuits (230) du dispositif optique (200), le signal électrique (E) et reconnaître une caractéristique (F) dans le signal électrique (E), ladite caractéristique étant une composante de fréquence du signal optique (S).

12. Procédé selon la revendication 11, comprenant en outre les étapes consistant à
transmettre, par l'ensemble de circuits (230), un signal de synchronisation (I) au dispositif de mesure optique (100) lors de la reconnaissance de la caractéristique (F) ;
réfléchir, par un réflecteur (210) du dispositif optique (200), le signal optique (S) vers le dispositif de mesure optique (100) ; et
recevoir, par le dispositif de mesure optique (100), le signal optique réfléchi (R) et le signal de synchronisation (1), corréler le signal optique réfléchi reçu (R) et le signal de synchronisation (1), déterminer une identité du dispositif optique (200) sur la base de la corrélation, et déterminer une position du dispositif optique (200) par rapport au dispositif de mesure optique (100).

13. Procédé selon la revendication 11 ou 12, comprenant en outre l'amplification et l'isolation du signal électrique (E).
